# EUROPÄISCHE PATENTANMELDUNG

(11) **EP 1 764 204 A2**
(43) Veröffentlichungstag der Anmeldung: **21.03.2007**
(21) Anmeldenummer: 06120428.5
(22) Anmeldetag: 11.09.2006
(51) Int. Cl.: B29C 44/56

(54) **Verfahren zur Herstellung von Blöcken oder Bahnen aus Schaumstoffteilen**

(30) Priorität: 19.09.2005 DE 102005044602
(71) Anmelder: BASF AKTIENGESELLSCHAFT, 67056 Ludwigshafen (DE)
(72) Erfinder: VATH, Bernhard, 68259, Mannheim (DE); MÖCK, Christof, 68259, Mannheim (DE)
(74) Vertreter: Schuck, Alexander

(57) **Zusammenfassung**

Die Erfindung betrifft ein Verfahren zur Herstellung von Blöcken oder Bahnen aus Schaumstoffteilen mindestens eines offenzelligen Schaumstoffes, bei welchen zunächst die Schaumstoffteile zu Flocken zerkleinert werden, die Flocken zu einem Verbund gepresst werden und anschließend die Flocken mechanisch durch Vernadeln verbunden werden.

## Beschreibung

Die Erfindung betrifft ein Verfahren zur Herstellung von Blöcken oder Bahnen aus Schaumstoffteilen mindestens eines offenzelligen Schaumstoffes sowie die Verwendung von Formteilen, die aus diesen hergestellt wurden.

Offenzellige Schaumstoffe auf Basis von Melaminharz-Schaumstoffen finden in steigendem Maße Anwendung in der Schall- und Wärmedämmung von Gebäuden und im Automobilbau. Melaminharz-Schaumstoffe zeichnen sich dadurch aus, dass diese schwer entflammbar sind und auch über einen großen Zeitraum bei Temperaturen bis zu 180 °C eingesetzt werden können.

Bei der Herstellung der Melaminharz-Schaumstoffe werden vorkonfektionierte Blöcke oder Bahnen erzeugt, die in den Handel gelangen. Aufgrund der vorgegebenen Abmaße der Blöcke oder Bahnen entsteht so bereits bei der Herstellung Abfallmaterial. Weiteres Abfallmaterial entsteht beim Zuschneiden der Blöcke oder Bahnen in Formteile, deren Form an den entsprechenden Einsatzbereich angepasst ist.

Um das hochwertige Abfallmaterial nicht entsorgen zu müssen, ist aus EP-B 0 646 452 ein Verfahren zur Herstellung von Schaumstoff-Formteilen bekannt, bei welchem Abfallteile aus offenzelligem Melaminharz-Schaumstoff mit einem Raumgewicht von 5 bis 100 g/l zu Flocken zerkleinert werden. Aus den Flocken wird zusammen mit einem Bindemittel, einem Härter und Wasser eine rieselfähige Masse zubereitet. Die rieselfähige Masse wird in eine geschlossene Form gegeben und in der Form auf ein Raumgewicht von 15 bis 120 g/l komprimiert. Durch Aushärten des Bindemittels wird die Form zu einem Formteil fixiert.

Nachteil bei dem bekannten Verfahren ist es, dass die zur Verbindung der Flocken eingesetzten Bindemittel/Härter-Kombinationen im Allgemeinen einer niedrigeren Brandschutzklasse angehören als der Melaminharz-Schaumstoff selbst. Aus diesem Grund können die so hergestellten Schaumstoff-Formteile nicht in Bereichen eingesetzt werden, die den Einsatz flammfester Materialien verlangen.

Aufgabe der vorliegenden Erfindung ist es daher, ein Verfahren bereitzustellen, durch welches Schaumstoffteile ohne den Einsatz von Bindemittel und Härter zu Blöcken oder Bahnen verbunden werden.

Gelöst wird die Aufgabe durch ein Verfahren zur Herstellung von Blöcken oder Bahnen aus Schaumstoffteilen mindestens eines offenzelligen Schaumstoffes, welches folgende Schritte umfasst:
(a) Zerkleinern der Schaumstoffteile zu Flocken,
(b) Pressen der Flocken zu einem Verbund,
(c) mechanisches Verbinden der Flocken durch Vernadeln.

Durch die Verbindung der Schaumstoffflocken durch Vernadeln wird der sonst notwendige Eintrag weiterer Stoffe in den Schaumstoff vermieden. Hierdurch bleibt die ursprüngliche Brandschutzklasse erhalten, und das so gewonnene Produkt kann diesbezüglich wie das ursprüngliche Material eingesetzt werden.

Unter einem offenzelligen Schaumstoff im Sinne der vorliegenden Erfindung versteht man einen Schaumstoff, bei welchem das Polymer eine verzweigte Struktur aus einzelnen Stegen bildet und die einzelnen Blasen, die beim Schäumen entstanden sind, miteinander verbunden sind. Im Unterschied dazu ist ein geschlossenzelliger Schaumstoff ein Schaumstoff, bei welchem jeweils einzelne Blasen vollständig durch Polymermaterial umschlossen sind und somit auch in fertig ausgeschäumtem und ausgehärtetem Kunststoff die einzelnen Schaumblasen durch Polymermembranen voneinander getrennt sind.

Ein offenzelliger Schaumstoff, der sich zur Herstellung von Blöcken oder Bahnen aus Schaumstoffteilen gemäß dem erfindungsgemäßen Verfahren eignet, weist vorzugsweise ein Porenvolumen von mindestens 0,95 m³/m³, bevorzugt von mindestens 0,98 m³/m³ und insbesondere von mindestens 0,985 m³/m³ auf. Unter dem Begriff Porenvolumen wird dabei das Verhältnis des Volumens der Poren bezogen auf das Volumen des Schaumstoffes verstanden. Mit zunehmenden Werten des Porenvolumens nimmt die Länge der Stege im offenzelligen Schaumstoff zu. Gleichzeitig nimmt der Durchmesser der Stege ab. Ein Vorteil von längeren Stegen gegenüber kürzeren Stegen ist, dass sich die längeren Stege beim Vernadeln besser miteinander verhaken und so eine stabilere Verbindung zwischen einzelnen Flocken erzielt wird. Ein kleinerer Durchmesser der Stege führt dazu, dass diese beim Herausziehen der Nadeln leichter reißen und auf diese Weise ein verbessertes Verhaken der einzelnen Stege miteinander erzielt wird. Hierdurch wird ebenfalls die Stabilität des Flockenverbundes erhöht.

Besonders geeignete offenzellige Schaumstoffe sind Melaminharz-Schaumstoffe. Die Herstellung von Melaminharz-Schaumstoffen wird zum Beispiel in EP-A 0 017 671 beschrieben. Hierbei werden eine wässrige Lösung oder eine Dispersion, welche ein Melamin/Formaldehyd-Vorkondensat, einen Emulgator, ein flüchtiges Treibmittel und einen Härter sowie gegebenenfalls übliche Zusatzstoffe enthalten, verschäumt und der Schaum anschließend ausgehärtet.

Neben Melaminharz-Schaumstoffen können auch Polyurethan-Schaumstoffe offenzellige Strukturen bilden. Polyurethan-Schaumstoffe eignen sich jedoch im Allgemeinen nicht für den Einsatz in brandgefährdeten Umgebungen, da Polyurethan-Schaumstoffe im Gegensatz zu Melaminharz-Schaumstoffen in der Regel nicht schwer entflammbar sind. Dem Fachmann sind jedoch auch mit Flammschutzmittel behandelte Polyurethan-Schaumstoffe bekannt, die in brandgefährdeten Umgebungen eingesetzt werden können.

Um einzelne Schaumstoffteile, die als Verschnitt beim Zuschneiden von Formteilen oder bei der Herstellung von Schaumstoffblöcken oder -bahnen anfallen, nicht entsorgen zu müssen, werden diese gemäß dem erfindungsgemäßen Verfahren zu Flocken zerkleinert.

Die Zerkleinerung der Schaumstoffteile zu Flocken kann dabei zum Beispiel durch Zerreißen der Schaumstoffteile, durch Schneiden oder durch Stanzen erfolgen. Bevorzugt werden die Flocken durch Zerreißen der Schaumstoffteile erzeugt, da in diesem Fall eine unregelmäßige Oberfläche entsteht, die eine bessere Verbindung der einzelnen Flocken beim Vernadeln ermöglicht.

Um die einzelnen Flocken durch Vernadeln zu einem Block oder einer Bahn verbinden zu können, weisen diese vorzugsweise in jede Richtung eine Ausdehnung im Bereich von 3 bis 250 mm, vorzugsweise im Bereich von 5 bis 100 mm und insbesondere im Bereich von 10 bis 50 mm auf.

Das mechanische Verbinden der Flocken durch Vernadeln erfolgt vorzugsweise auf die gleiche Weise, wie das Vernadeln von Fasern zu einem Vlies. Die Herstellung eines Vlieses durch Vernadeln ist zum Beispiel aus DE-A 198 19 733 bekannt. Hierbei wird das Abstreifen des Vlieses von den Nadeln dadurch unterstützt, dass sich auf der dem Vlies gegenüberliegenden Seite des Abstreifers ein Druckluftraum befindet, aus welchem Druckluft durch Kanäle im Abstreifer auf das Vlies strömt und so das Vlies vom Abstreifer in Richtung der Stichunterlage gedrückt wird. Es ist jedoch auch möglich, das Vlies mit Hilfe des Abstreifers ohne Druckluftunterstützung von den Nadeln abzustreifen.

In einer bevorzugten Ausführungsform werden die Flocken zum Vernadeln auf eine Unterlage gegeben, welche diese durch eine Nadelmaschine transportiert. In der Nadelmaschine befindet sich ein Nadelbrett mit daran angeordneten Nadeln, die jeweils mit mindestens einem Widerhaken versehen sind. Das Nadelbrett mit den daran angebrachten Nadeln bewegt sich senkrecht zur Förderrichtung der Flocken auf und ab, wobei jeweils bei der Abwärtsbewegung des Nadelbrettes die Flocken von den Nadeln durchstochen werden. Bei der Aufwärtsbewegung der Nadeln bleiben die Stege des offenzelligen Schaumstoffes an den Widerhaken der Nadeln hängen, wodurch weiter unten liegende Flocken gegen weiter oben liegende Flocken gezogen werden. Beim Herausziehen der Nadeln aus den Flocken verhaken sich einzelne Flocken miteinander und verbinden sich so mechanisch. Damit die Nadeln aus den Flocken herausgezogen werden können, befindet sich vorzugsweise oberhalb des Flockenverbundes ein Abstreifer, durch welchen die Nadeln hindurchgezogen werden.

Anstelle der Anordnung auf einem Nadelbrett können die mit Widerhaken versehenen Nadeln auch auf einer Walze angeordnet sein. Die Walze dreht sich vorzugsweise mit einer Umfangsgeschwindigkeit, die der Geschwindigkeit entspricht, mit der sich auch die Unterlage mit den darauf liegenden Flocken bewegt. Nachdem die Nadeln die Flocken durchstochen haben, wird der durch Verhaken der Stege der einzelnen Flocken erzeugte Verband auch hier mit Hilfe eines Abstreifers von der Walze abgezogen.

In einer weiteren Ausführungsform sind die mit Widerhaken versehenen Nadeln innerhalb der Walze derart angeordnet, dass diese durch Öffnungen in der Walzenoberfläche durch die Walze herausbewegt werden können. Zum Vernadeln der einzelnen Flocken werden die Nadeln in dem Bereich, in dem die Walze auf den Flocken aufliegt, aus der Walze herausbewegt und durch die Flocken gestochen. Beim Zurückziehen der Nadeln in die Walze wird der vernadelte Flockenverbund von der Walze getrennt und kann einer Konfektionierung zugeführt werden.

Neben den vorgehend beschriebenen Ausführungsformen, bei denen die Widerhaken an den Nadeln so ausgebildet sind, dass das Verhaken der Stege beim Herausziehen der Nadeln erfolgt, ist es auch möglich, die Widerhaken an den Nadeln so auszubilden, dass die Nadeln bei der Abwärtsbewegung die Stege des offenzelligen Schaumstoffes ergreifen und das Verhaken einzelner Flocken miteinander bei der Abwärtsbewegung der Nadeln erfolgt.

Wenn ein Verbinden der Flocken mit der Unterlage vermieden werden soll, sind in der Unterlage vorzugsweise an den Positionen, an denen die Nadeln die Unterlage durchsticht, Öffnungen ausgebildet, durch welche die Nadeln geführt werden.

Es ist jedoch auch möglich, als Unterlage ein Vlies einzusetzen, mit welchem die Flocken des offenzelligen Schaumstoffes verbunden werden. In diesem Fall ist es nicht notwendig, eine weitere Unterlage einzusetzen, auf der das Vlies und die Flocken durch die Nadelmaschine gefördert werden.

Die zum Vernadeln der einzelnen Flocken eingesetzten Nadeln können zum Beispiel geordnet oder ungeordnet angeordnet sein. In einer bevorzugten Ausführungsform sind die Nadeln in Reihen angeordnet, die quer zur Bewegungsrichtung der Flocken verlaufen. Bei Verwendung eines Nadelbrettes sind vorzugsweise mehrere Nadelreihen auf dem Nadelbrett angeordnet. Bei Verwendung einer Walze sind die einzelnen Nadelreihen beispielsweise in axialer Richtung auf der Walze angeordnet. Es ist jedoch auch eine Anordnung der Reihen in jedem beliebigen Winkel zur axialen Richtung bis hin zu einem rechten Winkel möglich. Bei einem rechten Winkel in Bezug auf die axiale Richtung sind die Reihen in Umfangsrichtung ausgerichtet. Die einzelnen Reihen haben dabei einen Abstand von jeweils 1 bis 100 mm, bevorzugt von 1 bis 50 mm und besonders bevorzugt von 1 bis 20 mm.

Der Abstand der Nadeln in einer Reihe liegt vorzugsweise im Bereich von 1 bis 100 mm, mehr bevorzugt im Bereich von 1 bis 25 mm und insbesondere im Bereich von 1 bis 10 mm. Dabei ist es möglich, dass sich der Abstand der Nadeln einer Reihe vom Abstand der Nadeln der benachbarten Reihe(n) unterscheidet. Weiterhin ist es möglich, dass die Nadeln in einer Reihe unterschiedliche Abstände aufweisen.

Neben der Anordnung in Reihen ist es auch möglich, die Nadeln in jeder beliebigen anderen regelmäßigen oder unregelmäßigen Anordnung auf dem Nadelbrett anzuordnen. Der Abstand zwischen zwei Nadeln entspricht dabei jeweils vorzugsweise dem Abstand, den die Nadeln in einer Reihe aufweisen. Dabei können zwischen zwei Nadeln jeweils immer im Wesentlichen gleiche Abstände ausgebildet sein. Es ist jedoch auch möglich, unterschiedliche Abstände zwischen zwei Nadeln vorzusehen.

Der minimale Abstand zwischen zwei Nadeln ist dadurch begrenzt, dass bei zu dicht gepackten Nadeln durch Zerreißen der Stege die Flocken nicht miteinander verhakt und dadurch mechanisch verbunden werden, sondern eine Trennung der einzelnen Flocken erfolgt.

Der maximal mögliche Abstand zwischen zwei Nadeln ist durch die Häufigkeit des Einstechens der Nadel in den Flockenverbund gegeben. Je häufiger ein Einstechen erfolgt, desto größer können die Abstände zwischen zwei Nadeln gewählt werden. Hierbei ist jedoch darauf zu achten, dass die Nadeln nicht jeweils an der gleichen Position in den Verbund einstechen sondern jeweils an Positionen, die zur vorherigen Einstichposition leicht verschoben sind.

Durch das Verhaken der Stege der einzelnen Flocken miteinander ist die Dichte der Blöcke oder Bahnen, die nach dem erfindungsgemäßen Verfahren hergestellt werden, größer als die Dichte der Schaumstoffteile des mindestens einen offenzelligen Schaumstoffes, die zu den Blöcken oder Bahnen verbunden werden. Dies ist darauf zurückzuführen, dass durch das Vernadeln und das damit verbundene Verhaken der Stege des offenzelligen Schaumstoffes das Porenvolumen abnimmt.

Je größer die Flocken sind, die durch das Vernadeln miteinander verbunden werden, umso größer ist das Porenvolumen des erfindungsgemäß hergestellten Schaumstoffblockes oder der erfindungsgemäß hergestellten Schaumstoffbahn. Dies ist darauf zurückzuführen, dass das Vernadeln lediglich zu einer mechanischen Verbindung der Schaumstoffflocken an deren Randbereichen führt. Somit ist bei dem erfindungsgemäß hergestellten Schaumstoff jeweils die Dichte am Randbereich der einzelnen, miteinander verbundenen Flocken größer als in der Mitte der jeweiligen Flocken. Eine Vergleichmäßigung der Dichte und eine nahezu vliesartige Struktur kann durch häufigeres Einstechen der Nadeln und/oder einen geringeren Abstand zwischen zwei Nadeln erzielt werden. Hierdurch lässt sich gezielt die Dichte des erfindungsgemäß hergestellten Schaumstoffblockes oder der erfindungsgemäß hergestellten Schaumstoffbahn einstellen.

Um eine stabile Verbindung der einzelnen Flocken zu erzielen, in denen sich jeweils einzelne Stege benachbarter Flocken miteinander verhaken, ist es erforderlich, dass sich die zu verbindenden Flocken zum Zeitpunkt des Einstechens der Nadeln berühren. Dies wird dadurch erreicht, dass die Flocken auf der Unterlage, auf der diese vernadelt werden, vor dem eigentlichen Vernadeln durch Ausübung von Druck zusammengepresst werden.

Der erforderliche Druck kann zum Beispiel mittels einer Walze, welche auf die auf der Unterlage verteilten Schaumstoffflocken presst, erzeugt werden. Die Umfangsgeschwindigkeit der Walze entspricht dabei vorzugsweise der Geschwindigkeit, mit der die Unterlage mit den darauf verteilten Flocken gefördert wird. Die Unterlage liegt dabei vorzugsweise auf einem Tisch oder einem Transportband auf, so dass diese zwischen der Walze und dem Tisch bzw. Transportband verläuft. Unter Tisch ist dabei jede im Wesentlichen ebene Unterlage zu verstehen, die gegenüber der Walze eine Gegenkraft auf die Unterseite der Unterlage mit den darauf verteilten Flocken ausüben kann. Als Transportband ist jede dem Fachmann bekannte Fördereinrichtung zu verstehen, die ein flexibles Band - zum Beispiel die Unterlage mit den darauf verteilten Flocken - von einem Ort zu einem anderen bewegen kann.

Neben dem Einsatz einer Walze, die auf die Flocken presst, und einer im Wesentlichen ebenen Unterlage, wie dem Tisch oder dem Transportband, ist es auch möglich, zwei gegensinnig rotierende Walzen einzusetzen, zwischen denen die Unterlage mit den darauf verteilten Flocken hindurchgeführt wird. Dabei sind die Walzen so angeordnet, dass diese sich mit einer vorzugsweise einstellbaren Kraft berühren, wenn keine Unterlage mit darauf verteilten Flocken zwischen diesen hindurchgeführt wird.

Die Position der mindestens einen Walze, mit der die Flocken gepresst werden, in Bezug auf die Baugruppe mit den Nadeln ist vorzugsweise so gewählt, dass eine möglichst geringe Rückverformung der einzelnen Flocken auftritt, bevor diese vernadelt werden. Das bedeutet, dass die mindestens eine Walze so dicht wie möglich vor der Baugruppe mit den Nadeln angeordnet ist.

Bei Verwendung einer mit Nadeln versehenen Walze können das Pressen der Schaumstoffflocken und das Vernadeln gleichzeitig erfolgen. Wenn die Walze mit Nadeln versehen ist, ist die Unterlage, gegen welche die mit Nadeln versehene Walze gepresst wird, vorzugsweise mit Nuten oder Langlöchern versehen, in welche die Nadeln eingreifen. Hierdurch wird vermieden, dass sich die Nadeln in den Öffnungen verhaken.

Wenn die Walze so gestaltet ist, dass die Nadeln jeweils an der Position, an der die Walze auf den Flockenverbund presst, aus der Walze herausgeführt werden, den Flockenverbund durchstechen und sofort wieder in die Walze zurückgezogen werden, ist es ausreichend, die Unterlage mit Öffnungen in dem Bereich, in dem die Nadeln durch den Verbund gestochen werden, zu versehen. Auch ist es in diesem Fall nicht notwendig, einen Abstreifer einzusetzen, da die Walze dadurch, dass die Nadeln bereits dann aus dem Flockenverbund herausgezogen werden, während die Walze noch Druck auf den Flockenverbund ausübt, selbst als Abstreifer wirkt.

Neben der Verwendung einer Walze, die auf die auf einem Tisch oder Transportband angeordnete Unterlage mit den darauf verteilten Flocken presst bzw. den zwei Walzen, zwischen denen die Unterlage mit den darauf verteilten Flocken durchgeführt wird, kann auch jede weitere, dem Fachmann bekannte Vorrichtung zur Ausübung von Druck auf ein sich bewegendes Band eingesetzt werden, sofern durch die Vorrichtung die Flocken nicht von der Unterlage geschoben werden.

Die erfindungsgemäß hergestellten Blöcke oder Bahnen aus Schaumstoffteilen können nach dem Vernadeln in einem weiteren Schritt zu Formteilen gestanzt oder zugeschnitten werden. Hierdurch ist es möglich, Formteile in beliebiger Form aus den Blöcken oder Bahnen herzustellen. Auch ist es möglich, an der Ober- oder Unterseite der Formteile Material zu entfernen und so Formteile herzustellen, deren Oberflächenstruktur an den entsprechenden Einsatzzweck angepasst ist.

Die bei der Herstellung solcher Formteile anfallenden Abfallstücke können dann erneut nach dem erfindungsgemäßen Verfahren zu Schaumstoffblöcken oder -bahnen verarbeitet werden.

Die erfindungsgemäß hergestellten Formteile können zur Wärmedämmung, zur Schalldämmung und/oder zur Schalldämpfung eingesetzt werden. Bevorzugte Verwendungsbereiche sind dabei die Schalldämmung und/oder Schalldämpfung in Gebäuden oder in Fahrzeugen oder die Schalldämmung von Anlagenteilen. Zur Schalldämmung und oder Schalldämpfung in Gebäuden können zum Beispiel Akustik-Platten auf Basis der erfindungsgemäß hergestellten Formteile an den Wänden und/oder der Decke befestigt werden oder es werden Paneeldecken eingesetzt, die mit den erfindungsgemäß hergestellten Formteilen hinterlegt sind. Eine Verbesserung der Raumakustik lässt sich auch dadurch erzielen, dass von den Decken Baffel-Absorber abgehängt werden. Derartige Baffel-Absorber führen zu einer Schallabsorption und damit zu einer Hallreduzierung insbesondere in großen Räumen.

Weiterhin können erfindungsgemäß hergestellte Formteile als Zwischenlage zwischen Gipskarton-, Span- oder Sperrholzplatten, Metall- oder Kunststoffdeckschichten zur Herstellung von akustisch wirksamen, leichten Sandwich-Elementen als Trennwände und Raumteiler verwendet werden.

Eine weitere Anwendung der erfindungsgemäßen Formteile ist die Innenauskleidung von Rollladenkästen. Diese Innenauskleidung dient sowohl zur Wärmedämmung als auch zur Minderung der Geräusche, die bei Betätigung eines Rollladens entstehen können.

Ein bevorzugtes Einsatzgebiet der erfindungsgemäß hergestellten Formteile im Fahrzeugbau ist die Schalldämmung und Wärmeisolierung des Motorraumes von Kraftfahrzeugen. Hierzu werden zum Beispiel passend zugeschnittene Formteile aus den erfindungsgemäß hergestellten Schaumstoffbahnen oder -blöcken an der Innenseite der Motorhaube befestigt.

Weiterhin können auch Fahrgastinnenräume von Kraftfahrzeugen mit erfindungsgemäß hergestellten Formteilen ausgekleidet werden, um diese vor Motor- und Fahrgeräuschen zu dämmen.

Ein bevorzugter Einsatzbereich der erfindungsgemäß hergestellten Formteile in Schienenfahrzeugen ist die Wand- und Deckenisolierung der Fahrgasträume.

Weiterhin eignen sich erfindungsgemäß hergestellte Formteile aufgrund der schweren Entflammbarkeit auch sehr gut zum Einsatz als Schall- und Wärmedämmung im Anlagenbau.

Neben den genannten Verwendungen zur Schalldämmung und Wärmeisolierung von Gebäuden, Fahrzeugen oder Anlagenteilen können aus den erfindungsgemäß hergestellten Schaumstoffbahnen oder -blöcken auch Reinigungsschwämme oder Auskleidungen von Transportbehältern hergestellt werden. Weiterhin steht es dem Fachmann offen, die erfindungsgemäß hergestellten Schaumstoffbahnen oder -blöcke für jede beliebige weitere Anwendung, bei der elastische Schaumstoffe eingesetzt werden, zu verwenden. Besonders bevorzugt sind hierbei alle Anwendungsgebiete, die schwer entflammbare Einsatzstoffe erfordern.

## Patentansprüche

1. Verfahren zur Herstellung von Blöcken oder Bahnen aus Schaumstoffteilen mindestens eines offenzelligen Schaumstoffs, welches folgende Schritte umfasst:
(a) Zerkleinern der Schaumstoffteile zu Flocken,
(b) Pressen der Flocken zu einem Verbund,
(c) Mechanisches Verbinden der Flocken durch Vernadeln.

2. Verfahren nach Anspruch 1, **dadurch gekennzeichnet, dass** der offenzellige Schaumstoff ein Porenvolumen von mindestens 0,95 m³/m³ aufweist.

3. Verfahren nach Anspruch 1 oder 2, **dadurch gekennzeichnet, dass** der offenzellige Schaumstoff ein Melaminharz-Schaumstoff ist.

4. Verfahren nach einem der Ansprüche 1 bis 3, **dadurch gekennzeichnet, dass** die Flocken eine Ausdehnung im Bereich von 3 mm bis 250 mm aufweisen.

5. Verfahren nach einem der Ansprüche 1 bis 4, **dadurch gekennzeichnet, dass** der zum Pressen der Flocken erforderliche Druck durch mindestens eine Walze, die mit gleicher Umfangsgeschwindigkeit rotiert, mit der sich die Flocken bewegen, erzeugt wird.

6. Verfahren nach einem der Ansprüche 1 bis 5, **dadurch gekennzeichnet, dass** die Flocken samt einer Unterlage zum Pressen zwischen zwei gegensinnig rotierenden Walzen hindurchgeführt werden.

7. Verfahren nach einem der Ansprüche 1 bis 6, **dadurch gekennzeichnet, dass** zum Vernadeln ein Nadelbrett mit in Reihen angeordneten Nadeln eingesetzt wird.

8. Verfahren nach Anspruch 7, **dadurch gekennzeichnet, dass** der Abstand der Reihen im Bereich von 1 bis 100 mm liegt.

9. Verfahren nach Anspruch 7 oder 8, **dadurch gekennzeichnet, dass** der Abstand der Nadeln in einer Reihe im Bereich von 1 bis 100 mm liegt.

10. Verfahren nach einem der Ansprüche 1 bis 6, **dadurch gekennzeichnet, dass** zum Vernadeln ein Nadelbrett mit unregelmäßig darauf verteilten Nadeln eingesetzt wird.

11. Verfahren nach Anspruch 10, **dadurch gekennzeichnet, dass** der Abstand zwischen zwei Nadeln im Bereich von 1 bis 100 mm liegt.

12. Verfahren nach einem der Ansprüche 1 bis 6, **dadurch gekennzeichnet, dass** zum Vernadeln Nadeln auf der Außenseite einer rotierenden Walze angeordnet sind, wobei beim Kontakt der Flocken mit der Walze die Nadeln durch die Flocken hindurchgestochen werden.

13. Verfahren nach einem der Ansprüche 1 bis 6, **dadurch gekennzeichnet, dass** zum Vernadeln im Inneren einer rotierenden Walze Nadeln angeordnet sind, die an der Position, an der die Walze die Flocken berührt, aus der Walze herausbewegt und durch die Flocken gestochen werden.

14. Verfahren nach Anspruch 12 oder 13, **dadurch gekennzeichnet, dass** die Umfangsgeschwindigkeit der Walze der Geschwindigkeit entspricht, mit der sich die Flocken bewegen.

15. Verfahren nach einem der Ansprüche 7 bis 14, **dadurch gekennzeichnet, dass** die Nadeln jeweils mindestens einen Widerhaken aufweisen.

16. Verfahren nach einem der Ansprüche 1 bis 15 **dadurch gekennzeichnet, dass** in einem weiteren Schritt die Blöcke oder Bahnen zu Formteilen gestanzt oder zugeschnitten werden.

17. Verwendung von Formteilen nach Anspruch 16 zur Schalldämmung in Gebäuden oder Fahrzeugen oder zur Schalldämmung von Anlagenteilen.

18. Verwendung von Formteilen nach Anspruch 17 als Reinigungsschwämme.

19. Verwendung von Formteilen nach Anspruch 18 zur thermischen Isolierung von Gebäuden, Fahrzeugen oder Anlagenteilen.
